# EUROPEAN PATENT APPLICATION

(11) **EP 1 336 873 A1**
(43) Date of publication of application: **20.08.2003**
(21) Application number: 01963412.0
(22) Date of filing: 04.09.2001
(51) Int. Cl.: G02B 5/28, G02B 5/00, G02B 3/00, G02B 6/293, G02B 27/10, H04B 10/12, C23C 14/34

(54) **OPTICAL ELEMENT HAVING WAVELENGTH SELECTIVITY**

(30) Priority: 05.09.2000 JP 2000268715
(71) Applicant: Nippon Sheet Glass Co., Ltd., Osaka-shi, Osaka 541-8559 (JP)
(72) Inventor: Toyoshima, Takayuki c/o NIPPON SH. GLASS CO.,LTD, Osaka-shi,Osaka 541-8559 (JP); Anzaki, Toshiaki c/o NIPPON SHEET GLASS CO., LTD., Osaka-shi, Osaka 541-8559 (JP); Nakama, Kenichi c/o NIPPON SHEET GLASS CO., LTD., Osaka-shi, Osaka 541-8559 (JP)
(74) Representative: Sherrard-Smith, Hugh
(86) International application number: JP0107644
(87) International publication number: WO02021169

(57) **Abstract**

An optical element having a wavelength selectivity, which is easy to manufacture and reduces the manufacturing cost. The optical element comprises a light guide plate (22) having opposing two end faces (22a, 22b), and a multilayered film filter (23) formed on at least one of the opposing two end faces of the light guide plate. The multilayered film filter includes high-refractive-index dielectric layers and low-refractive-index dielectric layers laminated alternately and its thickness continuously changes in accordance with a position of the associated end face of the light guide plate. The center wavelength of transmitted light from the multilayered film filter differs in accordance with the position of the end face of the light guide plate. In a case where mixed light is input to the multilayered film filter from individual lenses via the light guide plate, the mixed light is separated to lights of different center wavelengths by the multilayered film filter that has different thicknesses.

## Description

### FIELD OF THE INVENTION

The present invention relates to an optical element having wavelength selectivity, and, more particularly, to an optical element which multiplexes lights of different wavelengths or demultiplexes multiplexed light wavelength by wavelength.

### BACKGROUND ART

Optical elements using an optical fiber and collimator lens have conventionally been used as optical communication equipment parts. When optical communication becomes very popular from now on, miniaturization and integration of optical communication equipment parts become further essential. Optical communication requires a technique which demultiplexes light by selectively transmitting or reflecting light wavelength by wavelength. A multilayered film filter which has high refractive-index dielectric layers and low refractive-index dielectric layers alternately laminated, e.g., an edge filter or a narrow-band filter, is known as an optical filter.

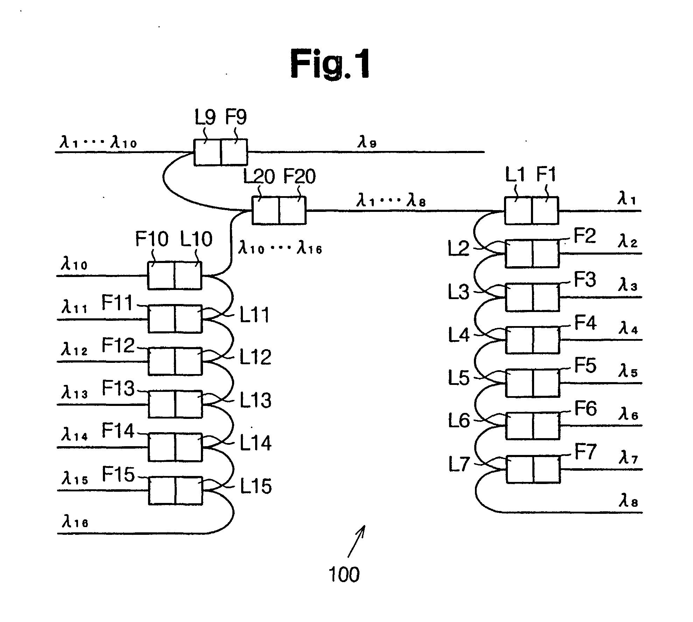

An optical communication equipment part 100 as shown in, for example, Fig. 1 is known as a conventional optical communication equipment part which uses such an optical filter. The optical communication equipment part 100 demultiplexes mixed light signal including sixteen kinds of optical signals of the wavelengths λ₁-λ₁₆ with different center wavelengths into individual optical signals. As shown in Fig. 1, the optical communication equipment part 100 includes a plurality of collimator lenses L1 to L7, L9 to L15, L20, a plurality of optical filters (a narrow-band filter) F1 to F7, F9, F10 to F15 and an edge filter F20. An optical signal is sent among those members through an optical fiber.

The mixed light signal including light signals of the wavelengths λ₁-λ₁₆ that has been input to the optical communication equipment 100 is input to the collimator lens L9 first and is separated into a transmitted light signal (light signal of the wavelength λ₉) and a reflected light signal (light signal of the wavelengths λ₁-λ₈ and wavelengths λ₁₀-λ₁₆) by the optical filter F9 formed at the lens L9. The reflected light signal from the optical filter F9 is input to the collimator lens L20 and is separated into a transmitted light signal (light signal of the wavelengths λ₁-λ₈) and a reflected light signal (light signal of the wavelengths λ₁₀-λ₁₆) by the optical filter F20 formed at the lens L20.

The transmitted light from the collimator lens L20 is input to the collimator lenses L1-L7 in order and the light signals of the wavelengths λ₁-λ₇ are output respectively from the optical filters F1-F7 formed at the respective lenses L1-L7. The light signal of the wavelength λ₈ or the reflected light from the optical filter F7 is output from the collimator lens L7.

Meanwhile, the reflected light from the collimator lens L20 is input to the collimator lenses L10-L15 in order and the light signals of the wavelengths λ₁₀-λ₁₅ are output respectively from the optical filters F10-F15 formed at the respective lenses L10-L15. The light signal of the wavelength λ₁₆ or the reflected light from the optical filter F15 is output from the collimator lens L7.

In this manner, the light signals of the wavelengths λ₁-λ₁₆ separated wavelength by wavelength are acquired from the mixed light signal including the light signals of the wavelengths λ₁-λ₁₆.

The aforementioned prior art shown in Fig. 1 has the following problems.
(1) Separation of multiplexed mixed light (wavelengths λ₁-λ₁₆) into lights of different center wavelengths requires multiple optical members, such as the optical filters F1-F7, F9-F15 and F20 and the collimator lenses L1-L7, L9 and L10-L15, thus increasing the manufacturing cost. With regard to the optical filters, particularly, the edge filter F20, narrow-band filters F1-F7 and F9-F15 are needed. Multiple narrow-band filters whose center wavelengths are shifted (the selected wavelengths are different from one another) should be prepared. This takes time and labor in preparing multiple optical filters, thus increasing the manufacturing cost.
(2) It is necessary to individually mount the optical filters F1-F7, F9-F15 and F20 to the end faces of the associated collimator lenses L1-L7, L9-L15 and L20. What is more, because each collimator lenses is relatively small, the mounting of each optical filter is a very delicate work. Therefore, the mounting of each optical filter is difficult and the working efficiency is poor. As a result, the manufacturing cost is further increased.
(3) A troublesome optical alignment work is needed to coincide the optical axes of collimator lenses and those of optical filters with one another. The alignment work should be executed by the number of the optical filters, thus increasing the manufacturing steps.

### DISCLOSURE OF THE INVENTION

The present invention has been made and aims at providing an optical element having wavelength selectivity, which is easy to manufacture and reduces the manufacturing cost.

To achieve the object, according to the first aspect of the invention, there is provided an optical element having a wavelength selectivity which comprises a light guide plate having opposing two end faces; and a multilayered film filter formed on at least one of the opposing two end faces of the light guide plate. The multilayered film filter includes high-refractive-index dielectric layers and low-refractive-index dielectric layers laminated alternately and its thickness continuously changes in accordance with a position of the associated end face of the light guide plate.

It is preferable that the thickness of the multilayered film filter should linearly change from a first end of one end face of the light guide plate toward a second end thereof.

It is preferable that the multilayered film filter should be formed on one of the two end faces of the light guide plate and a reflection film is formed on the other.

It is preferable that the reflection film should be an optical thin film having an optical
amplification/reflection function.

It is preferable that the light guide plate should have an exposed surface for letting light input into the light guide plate obliquely or letting light go outside obliquely from inside the light guide plate, and the exposed surface should be formed by removing a part of one of the multilayered film filter and the reflection film.

It is preferable that the multilayered film filter should be formed on the two end faces of the light guide plate.

It is preferable that the light guide plate should have an exposed surface for letting light input into the light guide plate obliquely or letting light go outside obliquely from inside the light guide plate, and the exposed surface should be formed by removing a part of one of the both multilayered film filters.

It is preferable that the light guide plate should include an inclined surface which is formed on one of the first and second ends and through which input light that is obliquely input into the light guide plate from outside, or output light that goes outside obliquely from inside the light guide plate passes substantially perpendicularly.

It is preferable that the light guide plate should include a prism array which is formed on one of the first and second ends and through which input light that is obliquely input into the light guide plate from outside, or output light that goes outside obliquely from inside the light guide plate passes substantially perpendicularly, and the prism array should have a plurality of minute inclined surfaces and is formed integral with or separate from the light guide plate.

It is preferable that the optical element should further comprise a plurality of optical fibers or a plurality of capillaries each having an optical fiber, provided on an outer surface of the multilayered film filter.

It is preferable that the plurality of optical fibers should be constituted by a single fiber array.

It is preferable that the optical element should further comprise a lens array, provided on an outer surface of the multilayered film filter, having a plurality of lenses each of which passes one of a plurality of lights having different wavelengths that have passed individual portions of the multilayered film filter.

It is preferable that the lens array should be a gradient index planar microlens including a single substrate and a plurality of microlenses formed at least in a line on the substrate.

It is preferable that each lens of the lens array should be arranged in such a way as to condense and output one of a plurality of lights having different wavelengths which have passed individual portions of the multilayered film filter.

It is preferable that at least one of the plurality of lenses should be arranged in such a way as to convert mixed light having different wavelengths to parallel light and output the parallel light.

It is preferable that the optical element should further comprise a light emitting device, provided on an outer surface of the multilayered film filter, for outputting mixed light including a plurality of lights having different wavelengths with respect to the filter.

It is preferable that the optical element should further comprise a light receiving device, provided on an outer surface of the multilayered film filter, for individually detecting a plurality of lights having different wavelengths which have passed the filter.

It is preferable that the multilayered film filter should be formed on at least one of the opposing two end faces of the light guide plate by physical vapor deposition.

According to the second aspect of the invention, there is provided an optical element having a wavelength selectivity which comprises a light guide plate having opposing two end faces; a lens array arranged on one of the two end faces of the light guide plate and having a plurality of lenses; and a multilayered film filter formed on at least one of an outer surface of the lens array and the other one of the two end faces of the light guide plate. The multilayered film filter includes high-refractive-index dielectric layers and low-refractive-index dielectric layers laminated alternately and its thickness continuously changes in accordance with a position of the end face of the light guide plate.

According to the third aspect of the invention, there is provided an optical element having a wavelength selectivity which comprises a light guide plate having opposing two end faces; a lens array arranged on one of the two end faces of the light guide plate and having a plurality of lenses; a reflection film, formed on the other one of the two end faces of the light guide plate, for reflecting light input to the light guide plate; and a multilayered film filter formed on an outer surface of the lens array. The multilayered film filter includes high-refractive-index dielectric layers and low-refractive-index dielectric layers laminated alternately and its thickness continuously changes in accordance with a position of the end face of the light guide plate.

It is preferable that the light guide plate and lens array should have a pair of side end faces, and one of the pair of side end faces should include an inclined surface through which input light into the light guide plate or to the lens array, or output light from inside the light guide plate or the lens array passes substantially perpendicularly.

It is preferable that the light guide plate and lens array should have a pair of side end faces, one of the pair of side end faces should include a prism array through which input light to the light guide plate or the lens array, or output light from inside the light guide plate or the lens array passes substantially perpendicularly, and the prism array should have a plurality of minute inclined surfaces and should be formed integral with or separate from the light guide plate and lens array.

It is preferable that some of the plurality of lenses of the lens array should be arranged in such a way as to condense and output light reflected at the reflection film and some of the other lenses of the lens array should be arranged in such a way as to convert light reflected at the multilayered film filter to parallel light and output the parallel light.

It is preferable that some of the plurality of lenses of the lens array should be arranged in such a way as to condense and output light reflected at the multilayered film filter and some of the other lenses of the lens array should be arranged in such a way as to convert light reflected at the reflection film to parallel light and output the parallel light.

### BRIEF DESCRIPTION OF THE DRAWINGS

The present invention, together with objects and advantages thereof, may be better understood by reference to the following description of the typified embodiments together with the accompanying drawings.
Fig. 1 is a schematic connection diagram of a conventional optical element.
Fig. 2 is a schematic perspective view of an optical element according to a first embodiment of the present invention.
Fig. 3 is a schematic cross-sectional view of a modification of the optical element in Fig. 2.
Fig. 4 is a schematic cross-sectional view of another modification of the optical element in Fig. 2.
Fig. 5 is a schematic cross-sectional view of a different modification of the optical element in Fig. 2.
Fig. 6 is a schematic cross-sectional view of an extension example of the optical element in Fig. 3.
Fig. 7 is a schematic cross-sectional view of an optical element according to a second embodiment of the present invention.
Fig. 8 is a schematic cross-sectional view of an optical element according to a third embodiment of the present invention.
Fig. 9 is a schematic perspective view of microlenses which are used in the optical element in Fig. 8.
Fig. 10 is a graph showing the characteristic of input light of the optical element in Fig. 8.
Fig. 11 is a graph showing the wavelength selectivity characteristic of the multilayered film filter of the optical element in Fig. 8.
Fig. 12 is a graph of light components which are separated by the optical element in Fig. 8.
Fig. 13 is a schematic cross-sectional view of a modification of the optical element in Fig. 8.
Fig. 14 is a graph showing the wavelength selectivity characteristic of the multilayered film filter of the optical element in Fig. 13.
Fig. 15 is a schematic cross-sectional view of another modification of the optical element in Fig. 8.
Fig. 16 is a graph of light components which are separated by the optical element in Fig. 15.
Fig. 17 is a cross-sectional view showing a schematic cross-sectional view of an optical element according to a fourth embodiment of the present invention.
Fig. 18A and Fig. 18B are graphs showing light components which are separated by the optical element in Fig. 17.
Fig. 19 is a schematic cross-sectional view of an optical element according to a fifth embodiment of the present invention.
Fig. 20 is a schematic cross-sectional view of a modification of the optical element in Fig. 19.
Fig. 21 is a schematic cross-sectional view of another modification of the optical element in Fig. 19.

### BEST MODE FOR CARRYING OUT THE INVENTION

### (First Embodiment)

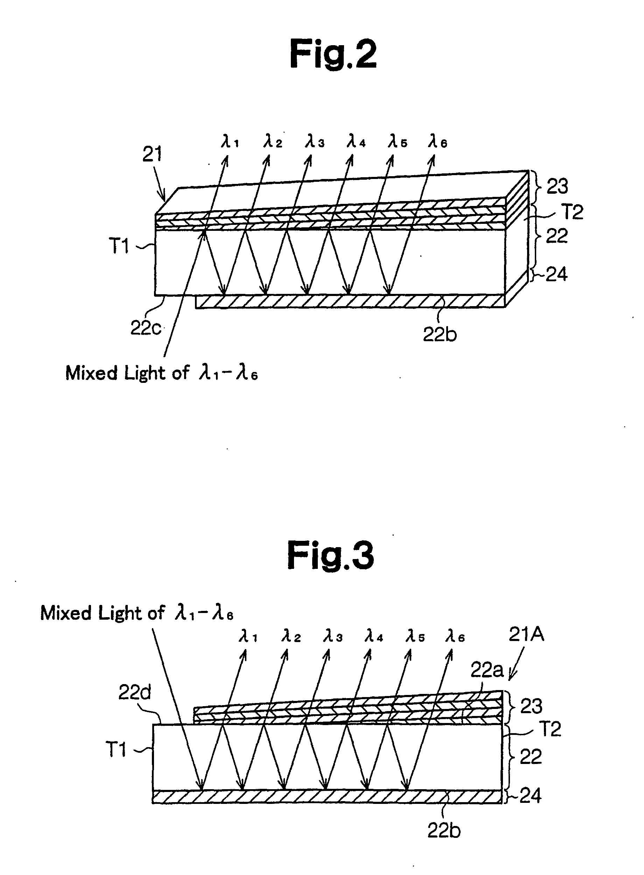

Fig. 2 is a schematic perspective view showing the cross section of an optical element 21 according to the first embodiment of the present invention. The optical element 21 includes a light guide plate 22, a multilayered film filter 23 and an optical thin film 24 as shown in Fig. 2. The multilayered film filter 23 is formed by alternately laminating high-refractive-index dielectric layers and low-refractive-index dielectric layers on lengthwise-directional one end face 22a of the light guide plate 22.

The light guide plate 22 is made of, for example, glass or resin, and is a transparent body having a higher refractive index than air. The light guide plate 22 is formed like a plate extending long and narrow in the right and left directions on the sheet of Fig. 2.

The multilayered film filter 23 is formed on the entire surface of the end face 22a of the light guide plate 22 in such a way that its thickness continuously changes in accordance with the individual positions of the light guide plate 22. Specifically, the thickness of the multilayered film filter 23 linearly increases from one end (left-hand end in Fig. 2) T1 of the light guide plate 22 toward the other end T2. That is, the thickness of the multilayered film filter 23 increases from one end T1 of the light guide plate 22 toward the other end T2. Therefore, the thinner the multilayered film filter 23 is, the shorter the center wavelength of light which passes through each portion of the multilayered film filter 23.

The multilayered film filter 23 is formed as a narrow-band filter or edge filter and the multilayered film filter 23 in the first embodiment is a narrow-band filter that passes only a specific wavelength which is determined by the thickness of the filter.

The multilayered film filter 23 is directly deposited on the end face 22a of the light guide plate 22 in vacuum by physical vapor deposition and has an excellent weatherability required for optical communication parts. Here, for example, a transparent oxide, such as titanium dioxide, tantalum oxide or niobium oxide, which is generally used for optical materials, and a mixture containing them are used for the high-refractive-index dielectric layers. For the low-refractive-index dielectric layers, for example, a transparent oxide, such as silicon dioxide, which is generally used for optical materials, or a transparent fluoride, such as magnesium fluoride, and a mixture containing them are used.

The multilayered film filter 23 is directly deposited on the end face 22a by physical vapor deposition, such as vacuum deposition or sputtering. To prepare the multilayered film filter 23 that has an excellent weatherability, magnetron sputtering, ion beam sputtering and ion-assisted deposition are used.

The optical thin film 24 is formed on an end face 22b which faces the end face 22a of the light guide plate 22. The optical thin film 24 includes, for example, a laminated film of an aluminum thin film and silicon dioxide, or a laminated film of an aluminum thin film, silicon dioxide and titanium dioxide. The optical thin film 24 can be a film which should increase the reflectance of light to be received via the light guide plate 22.

A part of the optical thin film 24 in the first embodiment is cut away in such a way that the light guide plate 22 has an exposed surface 22c. Light enters the light guide plate 22 obliquely or light goes out of the light guide plate 22 via the exposed surface 22c. The input light is parallel light and is supplied to the exposed surface 22c from another optical communication part via, for example, a collimator lens or an optical fiber.

The action of the optical element 21 will be described next.

Mixed light including lights of different wavelengths (e.g., wavelength components of λ₁-λ₆) is input into the light guide plate 22 from the exposed surface 22c obliquely with respect to the end face 22a. Then, the mixed light travels (passes) in the light guide plate 22 from a thinner side of the multilayered film filter 23 toward a thicker side while being repeatedly reflected between the two end faces 22a and 22b. Accordingly, the position where the mixed light is input to the multilayered film filter 23 shifts toward the thicker side by a given shift amount according to the angle of incidence of the mixed light. This causes the mixed light to be separated into lights of different wavelengths by the multilayered film filter 23.

Specifically, mixed light is input first in the position where the multilayered film filter 23 is located (the leftmost, first position in Fig. 1). Then, only the light component of the center wavelength (transmission wavelength of λ₁) that is determined by the thickness of the multilayered film filter 23 in the first position passes the multilayered film filter 23 and light components of the other center wavelengths are reflected at the multilayered film filter 23. Accordingly, only the light component of the center wavelength λ₁ is separated.

Next, the mixed light (λ₂-λ₆) reflected in the first position is reflected at the optical thin film 24 at the end face 22b and is input again to the multilayered film filter 23. At this time, the input position (second position) of the mixed light is shifted from the first position toward the thicker side of the multilayered film filter 23 by a distance (shift amount) according to the incident angle of the mixed light. Therefore, the mixed light is input to the multilayered film filter 23 in the second position which is thicker than the first position. Accordingly, only the light component of the center wavelength (transmission wavelength of λ₂. λ₂ > λ₁) ) that is determined by the thickness in the second position passes the multilayered film filter 23 and the other light components (λ₃-λ₆) are reflected at the multilayered film filter 23. Accordingly, only the light component of the center wavelength λ2 is separated.

Thereafter, as the input position of the mixed light including the remaining separated wavelength components with respect to the multilayered film filter 23 is shifted toward the long wavelength side by a shift amount in a similar manner, the light components of the center wavelengths (transmission wavelengths λ₃, λ₄, λ₅ and λ₆) that are determined by the thicknesses in the individual input positions are separated by the multilayered film filter 23 in order (in the ascending order of numbers).

In this way, the mixed light which includes lights of different wavelengths is separated into light components of different center wavelengths (light components of λ₁-λ₆) by the multilayered film filter 23.

The optical element 21 of the first embodiment has the following advantages.

The multilayered film filter 23 that separates mixed light is formed on the entire surface of the lengthwise-directional one end face 22a of the light guide plate 22 in such a way that its thickness changes. This eliminates the need for multiple optical members for separating mixed light. Particularly, multiple optical filters of different types become unnecessary. Therefore, the number of parts of the optical element 21 is reduced and the multilayered film filter 23 is easily formed. As a result, the number of working steps for the optical element 21 is reduced and the manufacturing cost is lowered.

The optical element 21 of the first embodiment may be modified and worked out as shown in Figs. 3 to 6.

As shown in Fig. 3, a part (end portion on a thinner side) of the multilayered film filter 23 of an optical element 21A may be cut away to form an exposed surface 22d of the light guide plate 22.

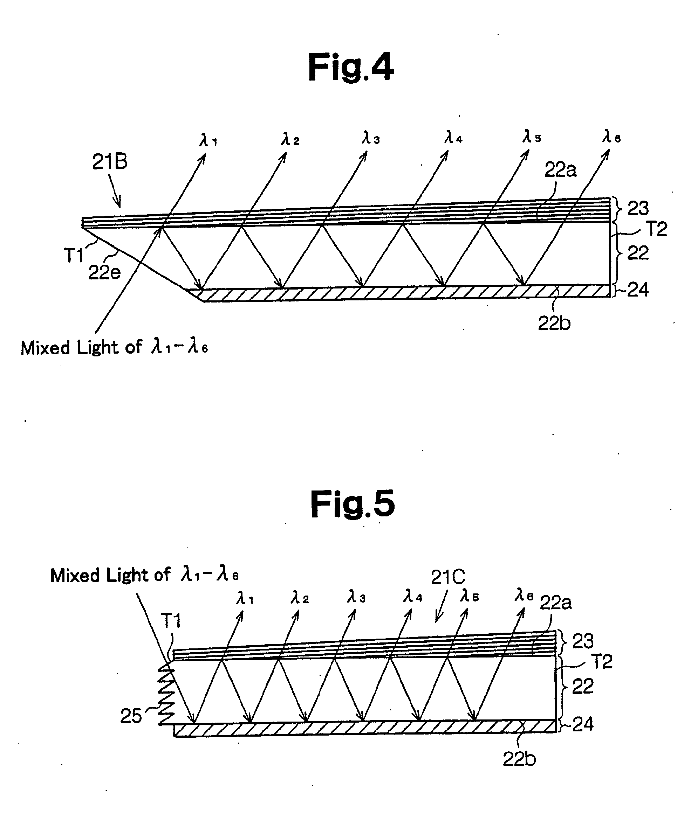

As shown in Fig. 4, an inclined surface 22e may be formed at the first end T1 of the light guide plate 22 of the optical element 21B. The inclined surface 22e is formed in such a way that input light that is obliquely input into the light guide plate 22 from outside, or output light that goes outside obliquely from inside the light guide plate 22 passes substantially perpendicularly.

In this case, mixed light can be input obliquely into the light guide plate 22 from sideways of the light guide plate 22 or output outside obliquely from inside the light guide plate 22 while suppressing the light loss at the inclined surface 22e by letting the mixed light input to or output from the inclined surface 22e approximately perpendicularly.

As shown in Fig. 5, a prism array 25 having a plurality of minute inclined surfaces is formed on the first end T1 of the light guide plate 22 of an optical element 21C. Each minute inclined surface is formed in such a way that input light which is obliquely input into the light guide plate 22 from outside or output light which goes outside obliquely from inside the light guide plate 22 passes approximately perpendicularly. The prism array 25 may be formed integral with or separate from the light guide plate 22.

In this case, mixed light can be input obliquely into the light guide plate 22 or output outside obliquely from inside the light guide plate 22 from sideways of the optical element 21C via the prism array 25 without enlarging the optical element 21C itself.

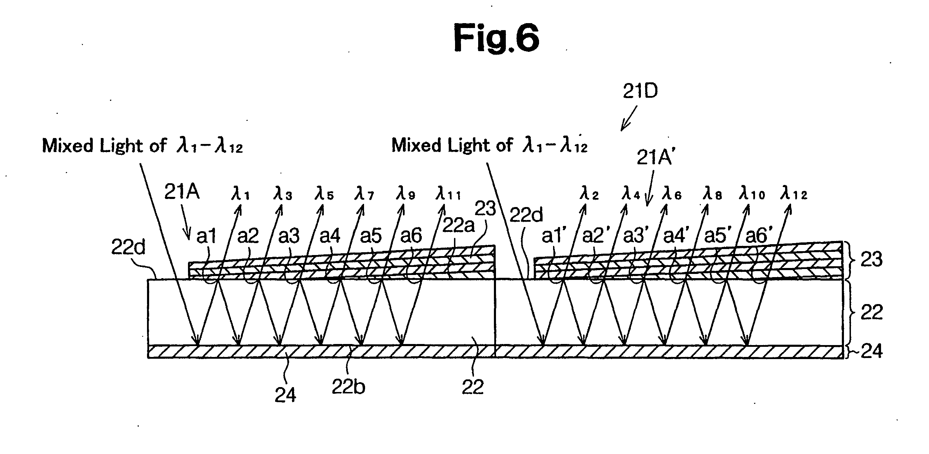

As shown in Fig. 6, the number of channels of an optical element 21D may be extended as needed. Fig. 6 shows a case of light signals of 12 channels (multiplexed light signal as mixed light including wavelength components of λ₁-λ₁₂) whose amount of information is doubled that of light signals of 6 channels (multiplexed light signal as mixed light including wavelength components of, for example, λ₁-λ₆).

In this case, the left-hand end of a second optical element 21A' is connected to the right-hand end of the first optical element 21A shown in Fig. 3. In the first optical element 21A, mixed light (multiplexed light signal) including lights of different wavelengths (wavelength components of, for example, λ₁-λ₁₂) is input obliquely with respect to the light guide plate 22 in such a way that the mixed light is input to individual positions a1-a6 of the multilayered film filter 23. In the second optical element 21A', mixed light is input obliquely with respect to the light guide plate 22 in such a way that the mixed light is input to individual positions a1'-a6' of the multilayered film filter 23. Here, the individual positions a1'-a6' are shifted from the individual positions a1-a6 by a predetermined amount toward a thicker side of the multilayered film filter 23.

With such a structure, in the first optical element 21A, mixed light is separated into light components of different center wavelengths (light components of λ₁, λ₃, λ₅, ..., λ₁₁) by the multilayered film filter 23. In the second optical element 21A', mixed light is separated into light components of different center wavelengths (light components of λ₂, λ₄, λ₆, ..., λ₁₂) by the multilayered film filter 23. Here, the wavelengths λ₂, λ₄, λ₆, ..., λ₁₂ are respectively longer than λ₁, λ₃, λ₅, ..., λ₁₁ (λ₂ > λ₁, λ₄ > λ₃, ..., λ₁₂ > λ₁₁). The relationship among the entire wavelengths is λ₁ < λ₂ < λ₃ < λ₄, ..., λ₁₁ < λ₁₂.

In this way, light signals of 12 channels (e.g., multiplexed light signal including wavelength components of λ₁-λ₁₂) is easily formed by using the optical element 21A with the same structure.

### (Second Embodiment)

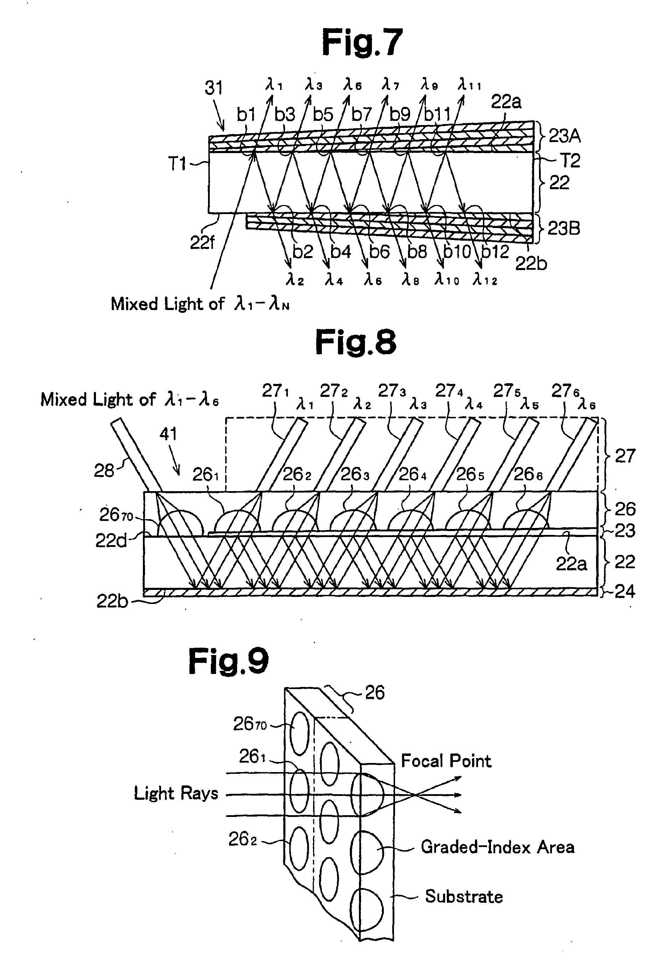

Fig. 7 is a schematic cross-sectional view of an optical element 31 according to the second embodiment of the invention. The optical element 31 includes a multilayered film filter 23A formed on the end face 22a of the light guide plate 22 and a multilayered film filter 23B formed on the end face 22b of the light guide plate 22.

A part of the multilayered film filter 23B (the end on a thinner side) is cut away, thus forming an exposed surface 22f on the light guide plate 22. Light is input obliquely with respect to the light guide plate 22 and light is output outside from inside the light guide plate 22, via the exposed surface 22f of the light guide plate 22.

While both multilayered film filters 23A and 23B are formed as a narrow-band filter or an edge filter, both are formed as narrow-band filter in the second embodiment. In the second embodiment, mixed light including lights of different wavelengths (e.g., wavelength components of λ₁-λ₁₂) is input, in the state of parallel light, to the light guide plate 22 via the exposed surface 22f.

The action of the optical element 31 will be described next.

Because input light which is mixed light travels inside the light guide plate 22 while being repeatedly reflected between the inner surfaces of each of both multilayered film filters 23A, B, the positions (b₁, b₃, ..., b₁₁) in which the input light enters the individual portions of one multilayered film filter 23A and the positions (b₂, b₄, ..., b₁₂) in which the input light enters the individual portions of the other multilayered film filter B are shifted from one another. Here, the positions b₂, b₄, ..., b₁₂ are shifted from the positions b₁, b₃, ..., b₁₁ by a predetermined amount toward a thicker side of the multilayered film filter 23.

Accordingly, the individual center wavelengths (wavelengths λ₁, λ₃, ..., λ₁₁) in the light components obtained by passing the individual positions of the multilayered film filter 23A differ from the individual center wavelengths (wavelengths λ₂, λ₄, ..., λ₁₂) in the light components obtained by passing the individual positions of the multilayered film filter 23B.

Mixed light including lights with center wavelengths of λ₁-λ₁₂ (light signal having the amount of information of 2ⁿ) is separated into lights with center wavelengths of λ₁, λ₃, ..., λ₁₁ by one multilayered film filter 23, and is separated into lights with center wavelengths of λ₂, λ₄, ..., λ₁₂ by the other multilayered film filter 23.

The optical element 31 of the second embodiment has the following advantage.

The multilayered film filters 23A, B are formed respectively in association with both end faces 22a and 22b of the light guide plate 22. It is therefore possible to acquire light components with a doubled information quantity, without changing the size of the optical element 31 itself, as compared with the case where the multilayered film filter 23 is formed on one end face 22a of the light guide plate 22.

### (Third Embodiment)

Fig. 8 is a schematic cross-sectional view of an optical element 41 according to the third embodiment of the invention. The optical element 41 includes a lens array 26 and a fiber array 27 in addition to the structure of the optical element 21A in Fig. 3.

The lens array 26 is provided (on the outer surface side of the multilayered film filter 23) in such a way as to contact the outer surface of the multilayered film filter 23 and the exposed surface 22d of the light guide plate 22. The fiber array 27 is provided in such a way as to contact the outer surface of the lens array 26.

The lens array 26 is formed by cutting a single, large gradient index planar microlens as shown in Fig. 9 at a location indicated by the two-dot chain line in the diagram, and has an elongated parallelepiped shape. The lens array 26 includes six lenses 26₁-26₆ and one lens 26₇₀ which contacts the exposed surface 22d of the light guide plate 22. The six lenses 26₁-26₆ are graded index regions through which a plurality of lights of different wavelengths (light components of λ₁-λ₆) that have passed the individual portions of the multilayered film filter 23 pass respectively.

The optical element 41 further includes an optical fiber 28 (or a capillary having an optical fiber inside) provided in such a way as to contact the outer surface of one end of the lens array 26. The focal position of the lens 26₇₀ lies on the outer surface of one end of the lens array 26 to which the output end of the optical fiber 28 is connected. Therefore, the optical fiber 28 is connected to the lens array 26 in such a way that the focal position coincides with the output end of the optical fiber 28. Accordingly, mixed light to be supplied from the optical fiber 28 is converted to parallel light by the lens 26₇₀ and the mixed light converted to parallel light is input into the light guide plate 22.

The input light is reflected at the optical thin film 24 and enters the lens 26₁ as parallel light via the multilayered film filter 23, and is condensed to the outer surface of the lens array 26 by the lens 26₁.

The mixed light or parallel light which travels toward the lens 26₁ via the multilayered film filter 23 is reflected in the first position of the multilayered film filter 23. Thereafter, it is repeatedly reflected between the optical thin film 24 and the multilayered film filter 23 and travels inside the light guide plate 22. The mixed lights that are respectively input to the second position, third position, ... and sixth position of the multilayered film filter 23 are respectively condensed to the outer surface of the lens array 26 by the lenses 26₂, 26₃, ..., 26₆. That is, the reflection positions of the mixed lights input to the individual lenses 26₁-26₆ at the optical thin film 24 coincide with the focal positions of the lenses 26₁-26₆.

The fiber array 27 includes six optical fibers 27₁-27₆ the axial centers of whose input ends coincide with the condensing positions (focal positions) of the lenses 26₁-26₆.

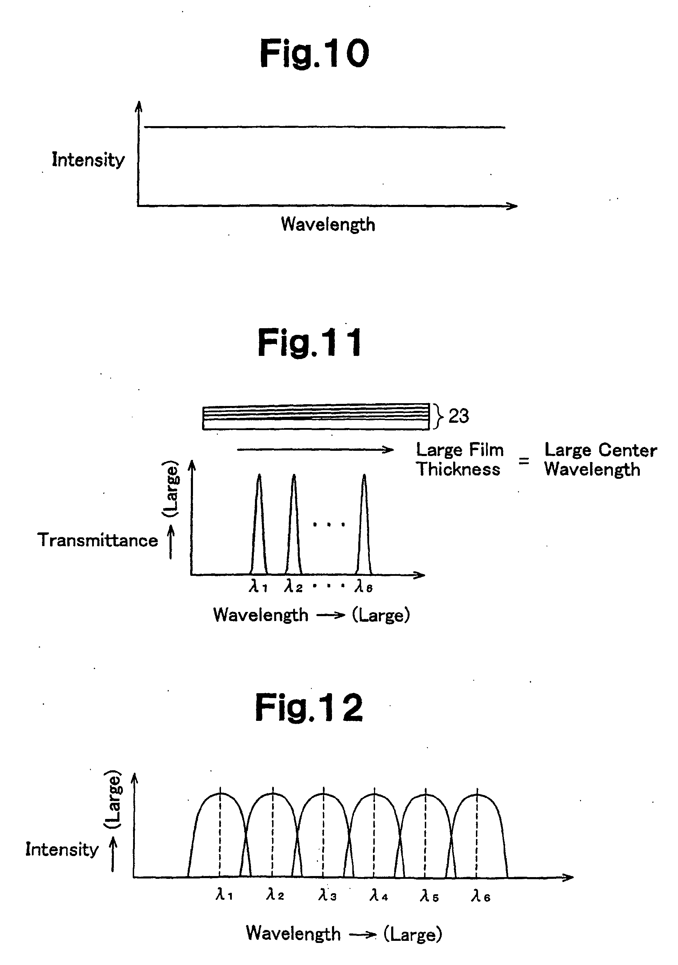

Fig. 10 is a graph showing the relationship between the wavelength distribution and intensity of mixed light input via the optical fiber 28. Fig. 11 is a graph showing the wavelength selectivity characteristic of the multilayered film filter 23 which is a narrow-band filter. Fig. 12 is a graph of individual light components which are separated at the individual portions of the multilayered film filter 23.

The optical element 41 of the third embodiment has the following advantages.
(1) The light components of different center wavelengths (λ₁-λ₆) separated by the multilayered film filter 23 are individually output from the optical fibers 27₁-27₆ of the fiber array 27 provided in the optical element 41. The intensities of the light components (λ₁-λ₆) to be separated are approximately even as shown in Fig. 12.
(2) The position of the fiber array 27 with respect to the lens array 26 has only to be adjusted once. The optical adjustment to match the condensing positions of the individual light components of different center wavelengths to be separated by the individual portions of the multilayered film filter 23 with the axial centers of the individual optical fibers 27₁-27₆ need not be carried out for each optical fiber. This significantly reduces the labor for the adjustment work.
(3) The condensing position of the lens 26₇₀ is set on the outer surface of one end of the lens array 26 to which the output end of the optical fiber 28 is connected. The optical fiber 28 is connected to the lens array 26 in such a way that the condensing position matches with the output end of the optical fiber 28. Therefore, mixed light sent from the optical fiber 28 is converted to parallel light by the lens 26₇₀ and the mixed light converted to parallel light is input into the light guide plate 22. That is, the optical element 41 has a collimator function for converting input light to parallel light.
   As a plurality of lights (individual light components) of different wavelengths which have passed the individual portions of the filter 23 are condensed by the lenses 26₁-26₆ on the outer surface side of the multilayered film filter 23, the optical element 41 has a condensing function.
   It is therefore possible to easily connect the optical element 41, with no collimator lens or condenser lens in between, to another optical communication part, such as an optical fiber. At the time the optical element is moduled as an optical wavelength selecting device having a collimator function or a condensing function, its attachment to an optical fiber becomes easy. As a result, an optical element having a high usability is acquired.
(4) A plurality of lights of different center wavelengths separated by the multilayered film filter 23 are condensed and output by the individual lenses 26₁-26₆. By forming the fiber array 27 in such a way that the condensing positions of the individual output lights respectively coincide with the axial centers of the input ends of the individual optical fibers, therefore, a single optical adjustment of the fiber array 27 with respect to the lens array 26 is sufficient, thus facilitating the assembling of the array.
(5) As the lens array 26 is a gradient index planar microlens having a plurality of microlenses formed at least in one line, a compact optical element having a wavelength selectivity is obtained.
(6) The individual lenses 26₁-26₆ of the lens array 26 are arranged in such a way that parallel light is input to the individual portions of the multilayered film filter 23. Because the mixed light that has been reflected at the optical thin film 24 is input to the individual portions of the multilayered film filter 23 at the same incidence angle, therefore, the film characteristic of the multilayered film filter 23, i.e., the wavelength selectivity characteristic, becomes improved.

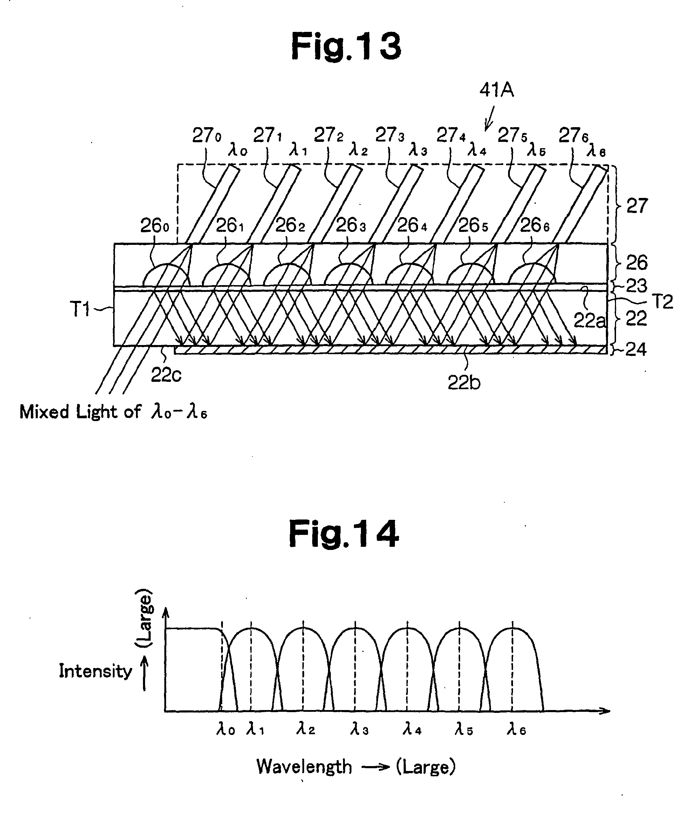

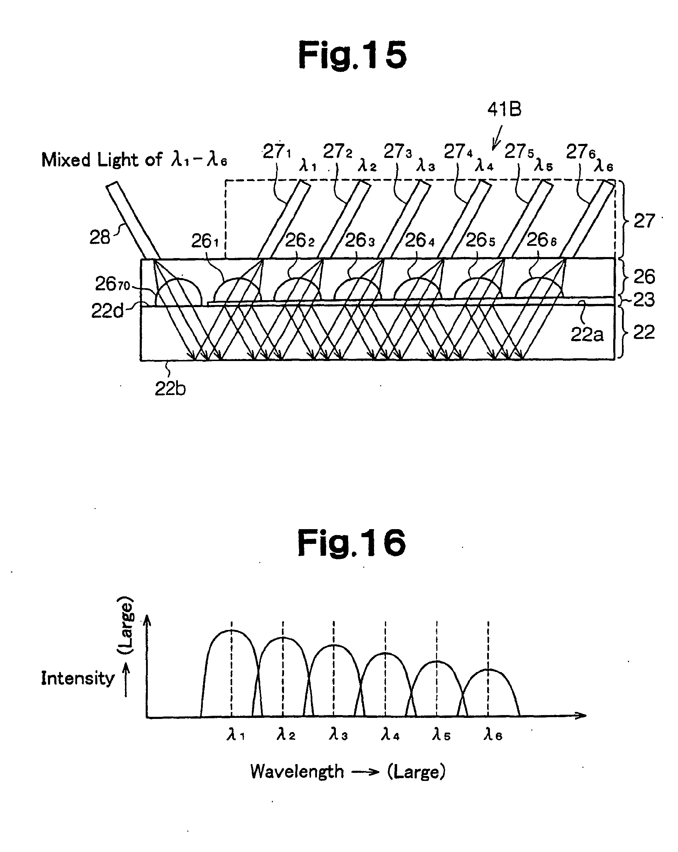

The optical element 41 of the third embodiment may be modified to an optical element 41A shown in Fig. 13 or an optical element 41B shown in Fig. 15.

As shown in Fig. 13, the end face 22b of the light guide plate 22 has the exposed surface 22c in the optical element 41A. The multilayered film filter 23 is an edge filter and is formed on the end face 22a of the light guide plate 22.

In the optical element 41A, when input mixed light is input to a position where the thickness of the multilayered film filter 23 is the thinnest, mixed light having a wavelength equal to or shorter than the wavelength λ₀ passes the multilayered film filter 23. Every mixed light having a wavelength longer than the wavelength λ₀ is reflected at the multilayered film filter 23 and then travels inside the light guide plate 22 while being repeatedly reflected. At this time, in the position the λ₀-removed mixed light is input following the multilayered film filter 23, mixed light having a wavelength equal to or shorter than the wavelength λ₁ passes the multilayered film filter 23 and every mixed light having a wavelength longer than the wavelength λ₁ is reflected at the multilayered film filter 23. Thereafter, this is repeated and the mixed light is separated into light components of wavelengths λ₀-λ₆ and those light components are respectively output from the optical fibers 27₁-27₆ of the fiber array 27. In this case, the optical element 41A has the following advantage.

As the multilayered film filter 23 is formed in the form of an edge filter, the multilayered film filter 23 can acquire the desired wavelength separating function with fewer films than a narrow-band filter. This results in easier manufacture.

Next, the optical thin film 24 which is formed on the end face 22b of the light guide plate 22 may be omitted as seen in the optical element 41B in Fig. 15. In this case, the optical element 41B has the following advantage.

In the case of the optical element 41B, mixed light input via the optical fiber 28 travels (transmits) inside the light guide plate 22 while being repeatedly reflected in the light guide plate 22 between the end face 22b and the multilayered film filter 23. At this time, there is no optical thin film 24 on the end face 22b, so that as the mixed light travels inside the light guide plate 22 from a thinner side of the multilayered film filter 23 toward a thicker side, the intensity of the mixed light is gradually lowered. As shown in Fig. 16, the longer the wavelength is, the lower the intensity of each light component (λ₁-λ₆) which is separated by the multilayed film filter 23 becomes. In the optical element 41B, the reduction in intensity is set within an allowable range. Consequently, the optical thin film 24 becomes unnecessary, thus reducing the manufacturing cost for the optical element 41B.

### (Fourth Embodiment)

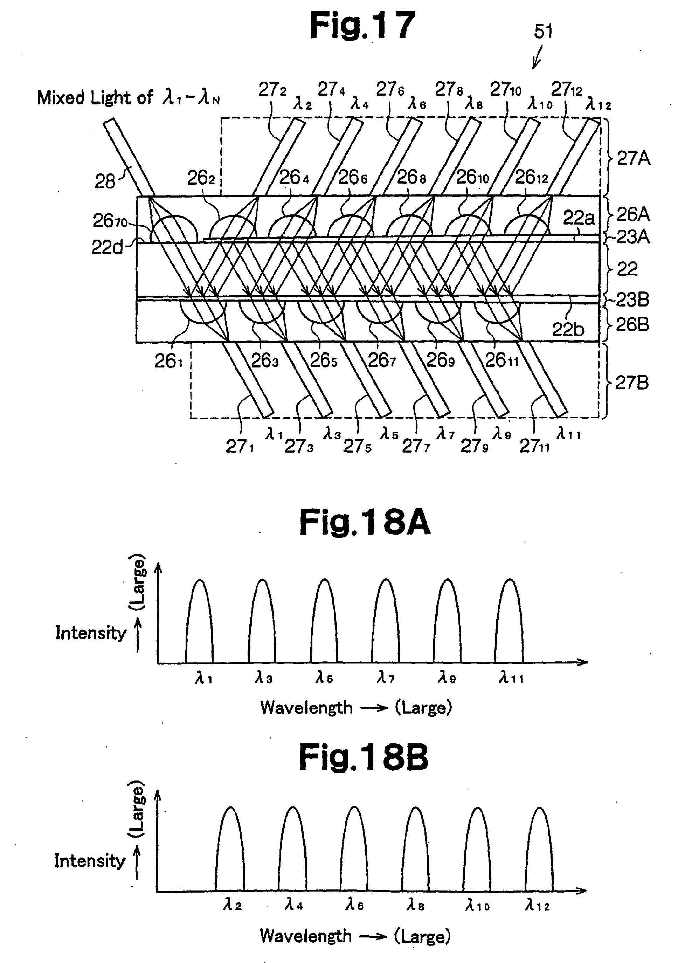

Fig. 17 is a schematic cross-sectional view of an optical element 51 according to the fourth embodiment of the invention. The optical element 51 includes a multilayered film filter 23B, a lens array 26B and a fiber array 27B in place of the optical thin film 24 (Fig. 8) of the optical element 41 of the third embodiment. The other structure of the optical element 51 is identical to that of the optical element 41 of the third embodiment.

In the optical element 51 of the fourth embodiment, a multilayered film filter 23A which is the same as the multilayered film filter 23 is formed on the end face 22a of the light guide plate 22. The lens array 26A which is the same as the lens array 26 is provided on the outer surface of the multilayered film filter 23A, and the fiber array 27A which is the same as the fiber array 27 is provided on the outer surface of the array 26A. It is to be noted however that the symbols of the individual lenses and the symbols of the individual optical fibers differ from those of the optical element 41 of the third embodiment in Fig. 8.

The multilayered film filter 23B which is the same as the multilayered film filter 23A is formed on the end face 22b of the light guide plate 22. The lens array 26B which is the same as the lens array 26A is provided on the outer surface of the multilayered film filter 23B, and the fiber array 27B which is the same as the fiber array 27A is provided on the outer surface of the array 26B.

In the optical element 51 of the fourth embodiment, the positions of the individual portions of the multilayered film filter 23A into which mixed light is input are set shifted by a predetermined amount toward a thicker side from the positions of the individual portions of the multilayered film filter 23B into which mixed light is input. Therefore, the wavelengths of the individual light components (λ₂, λ₄, ..., λ₁₂) which pass the individual portions of the multilayered film filter 23A and are separated are respectively longer than those of the individual light components (λ₁, λ₃, ..., λ₁₁) which pass the individual portions of the multilayered film filter 23B and are separated. The relationship among the wavelengths of the individual light components is λ₁ < λ₂ < λ₃ < λ₄, ..., λ₁₁ < λ₁₂ (see Fig. 18A and Fig. 18B).

The optical element 51 of the fourth embodiment has the following advantages.

Input light which is mixed light travels inside the light guide plate 22 while being repeatedly reflected between both multilayered film filters 23A and 23B. The positions in which the input light enters the individual portions of the multilayered film filter 23A and the positions in which the input light enters the individual portions of the multilayered film filter B are shifted from each other. Therefore, the center wavelengths (wavelengths λ₂, λ₄, ..., λ₁₂) of the individual light components which are acquired by passing the individual portions of the multilayered film filter 23A differ from the center wavelengths (wavelengths λ₁, λ₃, ..., λ₁₁) of the individual light components which are acquired by passing the individual portions of the multilayered film filter 23B. Therefore, the optical element 51 of the fourth embodiment can acquire light components have an information quantity doubled as compared with the optical element 51 of the third embodiment.

### (Fifth Embodiment)

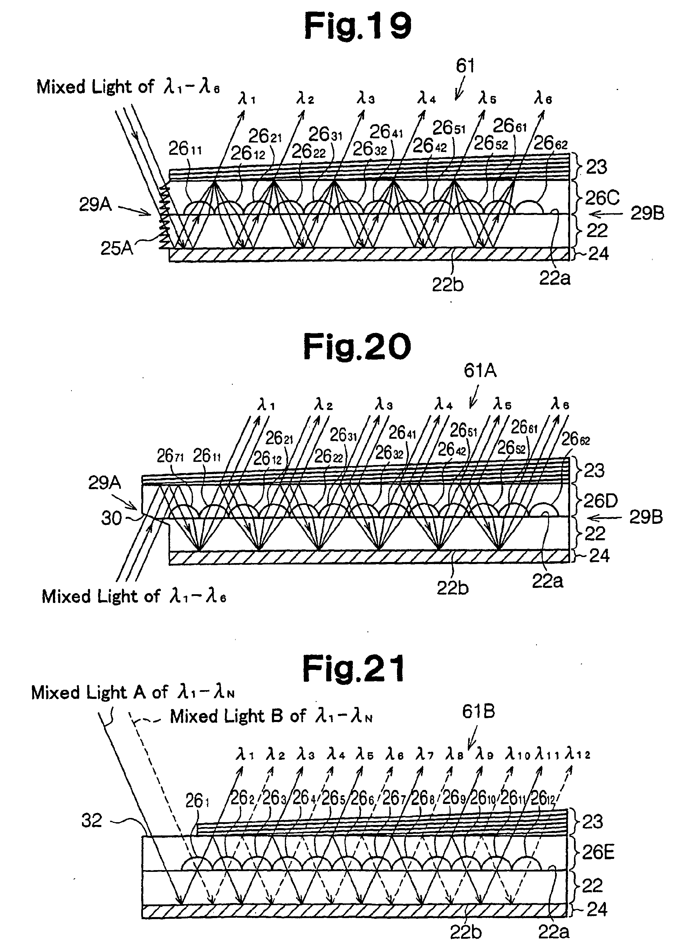

Fig. 19 is a schematic cross-sectional view of an optical element 61 according to the fifth embodiment of the invention. In the optical element 61, a lens array 26C is provided on the end face 22a of the light guide plate 22 and the optical thin film 24 is formed on the end face 22b of the light guide plate 22. The multilayered film filter 23 is formed on the outer surface of the lens array 26C. A prism array 25A similar to the prism array 25 is formed on the first end 22T1 of the light guide plate 22 over both one end face of the lens array 26C and one side surface of the light guide plate 22.

In the optical element 61 of the fifth embodiment, mixed light from another optical communication part is input obliquely into the optical element 61 in the state of parallel light via the prism array 25A. The mixed light which is input light travels inside the light guide plate 22 while being repeatedly reflected between the optical thin film 24 and the multilayered film filter 23. At this time, the mixed light which is reflected at the individual portions of the optical thin film 24 is condensed to the individual portions of the inner surface of the multilayered film filter 23 by individual lenses 26₁₁, 26₂₁, 26₃₁, 26₄₁, 26₅₁ and 26₆₁ in the lens array 26C and is respectively input to the filter 23.

Meanwhile, the mixed light which is reflected at the individual portions of the inner surface of the multilayered film filter 23 is converted to parallel light by individual lenses 26₁₂, 26₂₂, 26₃₂, 26₄₂, 26₅₂ and 26₆₂ in the lens array 26C and the mixed light converted to parallel light is input to the optical thin film 24.

The optical element 61 of the fifth embodiment has the following advantages.
(1) The mixed light input to the optical element 61 is condensed to the individual portions of the inner surface of the multilayered film filter 23 by the individual lenses 26₁₁, 26₂₁, 26₃₁, 26₄₁, 26₅₁ and 26₆₁ and is respectively input to the filter 23. A condensed light component is substantially output from each portion of the multilayered film filter 23. In case where the fiber array 27 as shown in Fig. 15 is provided on the outer surface side of, for example, the multilayered film filter 23, therefore, it is possible to accurately and easily match the input end of each optical fiber of the array 27 with the center of each output light (primary light ray) from the multilayered film filter 23. This facilitates the attachment of the fiber array 27 to the lens array 26.
(2) The prism array 25A is formed on the first end T1 of the light guide plate 22 over both one end face of the lens array 26C and one side surface of the light guide plate 22. It is therefore possible to adjust the input angle or the output angle of mixed light in a wide angular range without enlarging the entire optical element 61.

The optical element 61 of the fifth embodiment may be modified to an optical element 61A shown in Fig. 20 or an optical element 61B shown in Fig. 21.

As shown in Fig. 20, in the optical element 61A, an inclined surface 30 similar to the inclined surface 22e shown in Fig. 4 is formed on the first end T1 of the light guide plate 22 over a part of one end face of a lens array 26D and one end face of the light guide plate 22. The lens array 26D further includes a lens 26₇₁ in addition to the twelve lenses 26₁₁-26₆₂ of the lens array 26C shown in Fig. 19. The lens 26₇₁ causes mixed light (parallel light) input substantially perpendicularly to the inclined surface 30 to be condensed onto the surface of the optical thin film 24.

The mixed light which is reflected at the individual portions of the inner surface of the multilayered film filter 23 is converted to parallel light by. the individual lenses 26₁₁, 26₂₁, ..., 26₆₁ in the lens array 26D and the mixed light converted to parallel light is input to the individual portions of the multilayered film filter 23. The mixed light which is reflected at the individual portions of the multilayered film filter 23 is condensed to the individual portions of the inner surface of the optical thin film 24 by the individual lenses 26₁₂, 26₂₂, ..., 26₆₂ in the lens array 26D. The optical element 61A has the following advantage.

The individual lenses 26₁₁, 26₂₁, ..., 26₆₁ in the lens array 26D convert mixed light, reflected at the individual portions of the inner surface of the optical thin film 24, to parallel lights and cause the mixed lights converted to parallel lights to be input to the individual portions of the multilayered film filter 23. Therefore, the mixed light reflected at the optical thin film 24 is input to the individual portions of the multilayered film filter 23 at the same input angle. As a result, the wavelength selectivity characteristic of the multilayered film filter 23 is improved.

Next, in the optical element 61B shown in Fig. 21, a lens array 26E in place of the prism array 25A of the optical element 61 has an exposed surface 32 exposed outside. The exposed surface 32 is formed by removing one end (a thinner side end) of the multilayered film filter 23.

In the optical element 61B, mixed lights A and B including the same individual light components are input into the optical element 61B at the same input angle from different input positions of the exposed surface 32. Here, the mixed light A is input in a position farther apart from the end (thinner side end) of the multilayered film filter 23 than the mixed light B. Accordingly, the positions in which the mixed light A is input to the individual portions of the multilayered film filter 23 after being reflected at the individual portions of the inner surface of the optical thin film 24 are respectively shifted, toward the thinner side of the multilayered film filter 23, from the positions in which the mixed light B is input to the individual portions of the multilayered film filter 23 after being reflected at the individual portions of the inner surface of the optical thin film 24.

Consequently, the wavelengths of the individual light components λ₁, λ₃, ..., λ₁₁ separated from the mixed light A by the multilayered film filter 23 are shorter than the wavelengths of the individual light components λ₂, λ₄, ..., λ₁₂ separated from the mixed light B by the multilayered film filter 23. The relationship among the wavelengths of the individual light components is λ₁ < λ₂ < λ₃ < λ₄, ..., λ₁₁ < λ₁₂. The optical element 61B has the following advantage.

By forming the exposed surface 32 on the lens array 26E, the number of individual light components that can be separated by the multilayered film filter 23 can be doubled as compared with the optical element 61 in Fig. 19 and the optical element 61A in Fig. 20. Therefore, the amount of information of light signals is increased without enlarging the optical element 61B.

It should be apparent to those skilled in the art that the present invention may be embodied in other alternative examples without departing from the spirit and scope of the invention.

In the optical element 21 of the first embodiment shown in Fig. 2, the optical elements 21A, 21B, 21C and 21D shown in Figs. 3 to 6, the optical element 31 of the second embodiment shown in Fig. 7, the optical element 61 of the fifth embodiment shown in Fig. 19 and the optical elements 61A and 61B shown in Figs. 20 and 21, a plurality of optical fibers or a plurality of capillaries which contact the outer surface of the multilayered film filter 23 may be provided. Each capillary has an optical fiber inside. This structure can allow light components of different center wavelengths, which are separated by the multilayered film filter 23, to be individually output to the individual optical fibers or the optical fibers in the individual capillaries.

Instead of individually providing a plurality of optical fibers or a plurality of capillaries on the outer surface of the multilayered film filter 23, a single fiber array including a plurality of optical fibers may be provided on the outer surface of the multilayered film filter 23. In this case, it is sufficient to adjust, once, the position of attachment of the fiber array to the optical element 21. It becomes unnecessary to individually perform optical adjustment to match the individual output positions of individual light components of different center wavelengths with the optical axes of the individual optical fibers by the number of the individual light components. This results in a significant reduction of the labor for the adjustment work.

In the optical element 21 of the first embodiment shown in Fig. 2, the optical elements 21A, 21B, 21C and 21D shown in Figs. 3 to 6, the optical element 31 of the second embodiment shown in Fig. 7, the optical element 61 of the fifth embodiment shown in Fig. 19 and the optical elements 61A and 61B shown in Figs. 20 and 21, a laser diode array (light emitting means) which contacts the outer surface of the multilayered film filter 23 may be provided. The laser diode array includes a plurality of laser diodes.

The laser diode array includes, for example, n laser diodes each of which emits a laser beam of the same wavelength range (e.g., the wavelength range including λ₁-λₙ). In this case, by individually controlling the ON/OFF of the individual laser diodes by, for example, a control circuit, different types of mixed lights including individual light components of wavelengths according to the ON and OFF, i.e., mixed lights having an information quantity of 2ⁿ can be prepared.

In the optical element 21 of the first embodiment shown in Fig. 2, the optical elements 21A, 21B, 21C and 21D shown in Figs. 3 to 6, the optical element 31 of the second embodiment shown in Fig. 7, the optical element 61 of the fifth embodiment shown in Fig. 19 and the optical elements 61A and 61B shown in Figs. 20 and 21, a photodetector array (light receiving means) which contacts the outer surface of the multilayered film filter 23 may be provided. The photodetector array includes a plurality of photodetectors.

In this case, given that the number of photodetectors is n, the individual light components with different center wavelengths of λ₁-λ₆ separated by the multilayered film filter 23 are individually detected by the photodetectors corresponding to the respective center wavelengths. Therefore, the photodetector array can convert a light signal having an information quantity of 2ⁿ to an electric signal having an information quantity of 2ⁿ.

In the optical element 61 of the fifth embodiment shown in Fig. 19 and the optical elements 61A and 61B shown in Figs. 20 and 21, a lens array similar to the lens array 26C may be provided, in place of the optical thin film 24, on the end face 22b of the light guide plate 22 too, and a multilayered film filter may be formed on the outer surface of the lens array.

## Claims

1. An optical element having a wavelength selectivity **characterized by** comprising:
a light guide plate (22) having opposing two end faces (22a, 22b); and
a multilayered film filter (23) which is formed on at least one of the opposing two end faces of the light guide plate and includes high-refractive-index dielectric layers and low-refractive-index dielectric layers laminated alternately and whose thickness continuously changes in accordance with a position of the associated end face of the light guide plate.

2. The optical element according to claim 1, **characterized in that** the thickness of the multilayered film filter linearly changes from a first end (T1) of one end face (22a) of the light guide plate toward a second end (T2) thereof.

3. The optical element according to claim 1 or 2, **characterized in that** the multilayered film filter is formed on one (22a) of the two end faces of the light guide plate and a reflection film (24) is formed on the other (22b).

4. The optical element according to claim 3, **characterized in that** the reflection film is an optical thin film having an optical amplification/reflection function.

5. The optical element according to claim 3 or 4, **characterized in that** the light guide plate has an exposed surface (22c, 22d) for letting light input into the light guide plate obliquely or letting light go outside obliquely from inside the light guide plate, and
the exposed surface is formed by removing a part of one of the multilayered film filter and the reflection film.

6. The optical element according to claim 1 or 2, **characterized in that** the multilayered film filter (23A, 23B) is formed on the two end faces of the light guide plate.

7. The optical element according to claim 6, **characterized in that** the light guide plate has an exposed surface (22f) for letting light input into the light guide plate obliquely or letting light go outside obliquely from inside the light guide plate, and
the exposed surface is formed by removing a part of one of the both multilayered film filters.

8. The optical element according to any one of claims 1 to 4 and 6, **characterized in that** the light guide plate includes an inclined surface (22e) which is formed on one of the first and second ends and through which input light that is obliquely input into the light guide plate from outside, or output light that goes outside obliquely from inside the light guide plate passes substantially perpendicularly.

9. The optical element according to any one of claims 1 to 4 and 6, **characterized in that** the light guide plate includes a prism array (25) which is formed on one of the first and second ends and through which input light that is obliquely input into the light guide plate from outside, or output light that goes outside obliquely from inside the light guide plate passes substantially perpendicularly, and
the prism array has a plurality of minute inclined surfaces and is formed integral with or separate from the light guide plate.

10. The optical element according to any one of claims 1 to 9, **characterized by** further comprising a plurality of optical fibers or a plurality of capillaries each having an optical fiber, provided on an outer surface of the multilayered film filter.

11. The optical element according to claim 10, **characterized in that** the plurality of optical fibers are constituted by a single fiber array.

12. The optical element according to any one of claims 1 to 9, **characterized by** further comprising a lens array (26) having a plurality of lenses each of which passes one of a plurality of lights having different wavelengths that have passed individual portions of the multilayered film filter.

13. The optical element according to claim 12, **characterized in that** the lens array is a gradient index planar microlens (26) including a single substrate and a plurality of microlenses formed at least in a line on the substrate.

14. The optical element according to claim 12 or 13, **characterized in that** each lens of the lens array is arranged in such a way as to condense and output one of a plurality of lights having different wavelengths which have passed individual portions of the multilayered film filter.

15. The optical element according to claim 12 or 13, **characterized in that** at least one (20₇₀) of the plurality of lenses is arranged in such a way as to convert mixed light having different wavelengths to parallel light and output the parallel light.

16. The optical element according to any one of claims 12 to 15, **characterized by** further comprising a plurality of optical fibers or a plurality of capillaries each having an optical fiber, provided on an outer surface of the lens array.

17. The optical element according to claim 16, **characterized in that** the plurality of optical fibers are constituted by a single fiber array (27).

18. The optical element according to any one of claims 1 to 9, **characterized by** further comprising a light emitting device, provided on an outer surface of the multilayered film filter, for outputting mixed light including a plurality of lights having different wavelengths with respect to the filter.

19. The optical element according to any one of claims 1 to 9, **characterized by** further comprising a light receiving device, provided on an outer surface of the multilayered film filter, for individually detecting a plurality of lights having different wavelengths which have passed the filter.

20. The optical element according to any one of claims 1 to 19, **characterized in that** the multilayered film filter is formed on at least one of the opposing two end faces of the light guide plate by physical vapor deposition.

21. An optical element having a wavelength selectivity **characterized by** comprising:
a light guide plate (22) having opposing two end faces (22a, 22b);
a lens array (26C) arranged on one (22a) of the two end faces of the light guide plate and having a plurality of lenses; and
a multilayered film filter (23) which is formed on at least one of an outer surface of the lens array and the other one (22b) of the two end faces of the light guide plate and includes high-refractive-index dielectric layers and low-refractive-index dielectric layers laminated alternately and whose thickness continuously changes in accordance with a position of the end face of the light guide plate.

22. An optical element having a wavelength selectivity **characterized by** comprising:
a light guide plate (22) having opposing two end faces (22a, 22b);
a lens array (26C) arranged on one (22a) of the two end faces of the light guide plate and having a plurality of lenses;
a reflection film (24), formed on the other one (22b) of the two end faces of the light guide plate, for reflecting light input to the light guide plate; and
a multilayered film filter (23) which is formed on an outer surface of the lens array and includes high-refractive-index dielectric layers and low-refractive-index dielectric layers laminated alternately and whose thickness continuously changes in accordance with a position of the end face of the light guide plate.

23. The optical element according to claim 21 or 22, **characterized in that** the light guide plate has an exposed surface (32) for letting light input into the light guide plate obliquely or letting light go outside obliquely from inside the light guide plate, and
the exposed surface is formed by removing a part of the multilayered film filter.

24. The optical element according to any one of claims 21 to 23, **characterized in that** the light guide plate and lens array have a pair of side end faces (29A, 29B), and
one (29A) of the pair of side end faces includes an inclined surface (30) through which input light into the light guide plate or to the lens array, or output light from inside the light guide plate or the lens array passes substantially perpendicularly.

25. The optical element according to any one of claims 21 to 23, **characterized in that** the light guide plate and lens array have a pair of side end faces (29A, 29B),
one (29A) of the pair of side end faces includes a prism array (25A) through which input light to the light guide plate or the lens array, or output light from inside the light guide plate or the lens array passes substantially perpendicularly, and
the prism array has a plurality of minute inclined surfaces and is formed integral with or separate from the light guide plate and lens array.

26. The optical element according to any one of claims 21 to 25, **characterized by** further comprising a plurality of optical fibers or a plurality of capillaries each having an optical fiber, provided on an outer surface of the multilayered film filter.

27. The optical element according to any one of claims 21 to 26, **characterized in that** the lens array is a gradient index planar microlens including a single substrate and a plurality of microlenses formed at least in a line on the substrate.

28. The optical element according to any one of claims 22 to 27, **characterized in that** some of the plurality of lenses of the lens array are arranged in such a way as to condense and output light reflected at the reflection film and some of the other lenses of the lens array are arranged in such a way as to convert light reflected at the multilayered film filter to parallel light and output the parallel light.

29. The optical element according to any one of claims 22 to 27, **characterized in that** some of the plurality of lenses of the lens array are arranged in such a way as to condense and output light reflected at the multilayered film filter and some of the other lenses of the lens array are arranged in such a way as to convert light reflected at the reflection film to parallel light and output the parallel light.

30. The optical element according to any one of claims 21 to 29, **characterized by** further comprising a light emitting device, provided on an outer surface of the multilayered film filter, for outputting mixed light including a plurality of lights having different wavelengths with respect to individual portions of the filter.

31. The optical element according to any one of claims 21 to 29, **characterized by** further comprising a light receiving device, provided on an outer surface of the multilayered film filter, for individually detecting a plurality of lights having different wavelengths which have passed individual portions of the filter.

32. The optical element according to any one of claims 21 to 31, **characterized in that** the multilayered film filter is formed on at least one of the opposing two end faces of the light guide plate by physical vapor deposition.
